# EUROPEAN PATENT SPECIFICATION

(11) **EP 1 980 347 B1**
(45) Date of publication and mention of the grant of the patent: **24.02.2010**
(21) Application number: 07007483.6
(22) Date of filing: 12.04.2007
(51) Int. Cl.: B23B 13/02, B23B 13/04, B23B 13/12

(54) **Bar feeding apparatus for automatically feeding bars to machine tools, in particular for feeding bars having different diameters**
Stangenzufuhrvorrichtung zum automatischen Zuführen von Stangen zu Werkzeugmaschinen, insbesondere zum Zuführen von Stangen mit unterschiedlichen Durchmessern
Appareil d'alimentation en barres pour alimenter automatiquement les barres de machines-outils, en particulier pour alimenter les barres comportant différents diamètres

(43) Date of publication of application: 15.10.2008
(73) Proprietor: Cucchi Giovanni & C.S.R.L., 20060 Bussero (MI) (IT)
(72) Inventor: Cucchi, Cesare, 20060 Bussero (IT)
(74) Representative: Coloberti, Luigi

(56) References cited:
- EP-A1- 0 776 718
- EP-A2- 0 940 207
- JP-A- 6 226 505
- US-A- 5 860 340

## Description

### BACKGROUND OF THE INVENTION

This invention concerns an apparatus for automatically feeding bars to single-spindle or multi-spindle machine tools, the apparatus being suitable in particular for automatically feeding bars having different diameters.

### STATE OF THE ART

Bar feeding apparatuses are generally known and used for automatically feeding bars to the spindles of a machine tool.

An apparatus of the aforementioned kind is for example known from US 5,860,340, which represents the closest state of the art and discloses an apparatus according to the preamble of claim 1. This apparatus comprises a plurality of openable guides for guiding the bars, which extend longitudinally in the front part of a rotating drum, as well as guiding and lifting means for guiding and lifting a corresponding plurality of axially movable bar-pushing members, disposed on the drum rearwards to the front guides; said rear guiding and lifting means are angularly movable with the respective bar-pushing members between an operative position aligned with a corresponding front guide, and a spaced apart position to allow the sideways introduction of a separate channel-shaped supporting element which rearwards supports the bars during their loading into each front guide, in correspondence with a pre-established angular position of the rotating drum.

The channel-shaped supporting element is in turn provided with an auxiliary bar-pushing member, which is suitable for forwarding bars until they are in correspondence with the front guides.

An apparatus of this kind however has several drawbacks, in particular related to the channel-shaped supporting element; in fact, since the channel-shaped element is designed as a member separate from the drum, it is necessary to provide for the precise coordination of the movements between the channel-shaped element itself and the drum, in order to ensure the reliable and constant operation of the apparatus.

In addition, the occurrence of clearances due to the normal wear of the various moving parts of the apparatus is the cause of possible misalignments between the channel-shaped supporting element and the front guides, with the result that the bars are not properly supported and guided along the apparatus itself.

A further problem of the conventional feeding apparatuses of the aforementioned kind lies in the fact that in order to feed bars of different diameters, it is necessary each time to provide for the use of a channel-shaped element of different dimensions, with a consequent loss of time in replacing the channel-shaped element itself, and also to carry out suitable adjustments to the control systems of the apparatus, so as to adapt their operation to the different characteristics of the channel-shaped element.

### OBJECTS OF THE INVENTION

The main object of this invention is to provide a bar feeding apparatus for automatically feeding bars to machine tools, which is structurally simple, and which has a precise and reliable operation over time, since it is free from problems of coordination between the different moving parts of the apparatus.

A further object of this invention is to provide a bar feeding apparatus of the aforementioned kind, whereby it is possible to automatically feed bars having different diameters, both to single-spindle machine tools, and to multi-spindle machine tools, without the need to replace or adjust any components of the apparatus.

### BRIEF DESCRIPTION OF THE INVENTION

The above can be achieved by means of a bar feeding apparatus for automatically feeding bars to at least one spindle of a machine tool, the apparatus comprising:
- an elongated drum, rotatably supported to turn according to a horizontal axis;
- a plurality of openable front guides for guiding the bars, longitudinally extending on said drum in angularly spaced apart positions;
- supporting means for supporting the bars at a rear end of the drum;
- pre-forwarding means for the bars, in correspondence with said rear supporting means, said pre-forwarding means being designed to impose a first forward movement to each bar along the drum to bring it in correspondence with said front guides;
- a plurality of elongated pushing members for pushing the bars, each in correspondence with a respective front guide; and
- lifting means for lifting the bar-pushing members, disposed on said drum rearwards to the front guides, said lifting means being supported to angularly rotate with said bar-pushing members, between a first position in which each lifting means is axially aligned with a respective front guide, and a second position spaced apart from the first,
characterised in that said rear supporting means for supporting the bars are disposed on said drum in alignment with each front guide,
in that said pre-forwarding means for pre-forwarding the bars comprise a forwarding member sliding parallel to the drum along said rear supporting means, said forwarding member being selectively connectable to a drive motor, and
in that each of said elongated bar-pushing members is shaped to engage with and disengage from a respective forwarding member for the bars, in correspondence with said first position of each lifting means for lifting the bar-pushing members.

### BRIEF DESCRIPTION OF THE DRAWINGS

These and further features according to this invention, will be more clearly evident from the following description with reference to the accompanying drawings, in which:

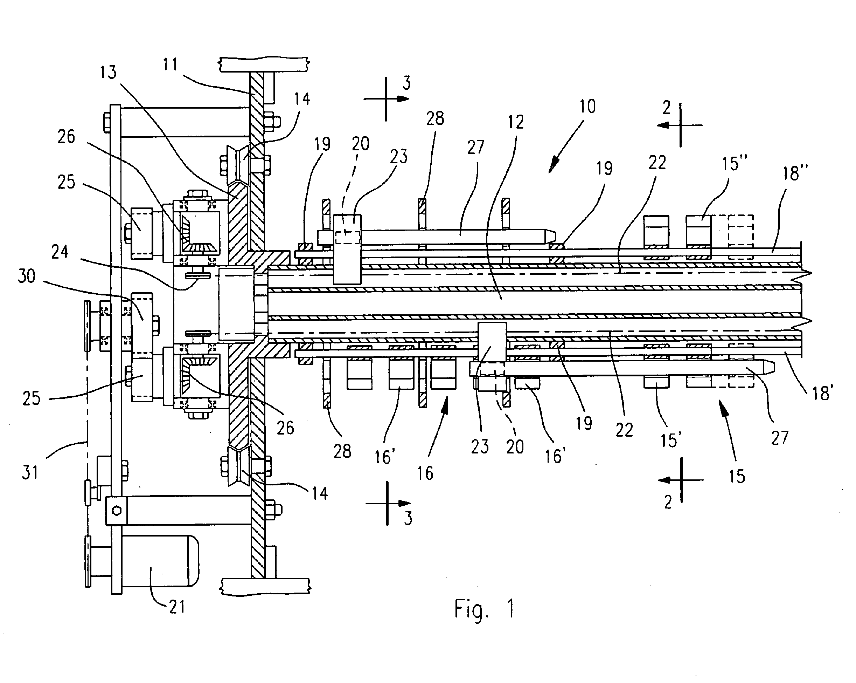

- Fig. 1 shows a longitudinal cross-sectional top view of an apparatus for automatically feeding bars to a machine tool, according to this invention;
- Fig. 2 shows an enlarged cross-sectional view of the apparatus along the line 2-2 of Fig. 1;
- Fig. 3 shows an enlarged cross-sectional view of the apparatus along the line 3-3 of Fig. 1;

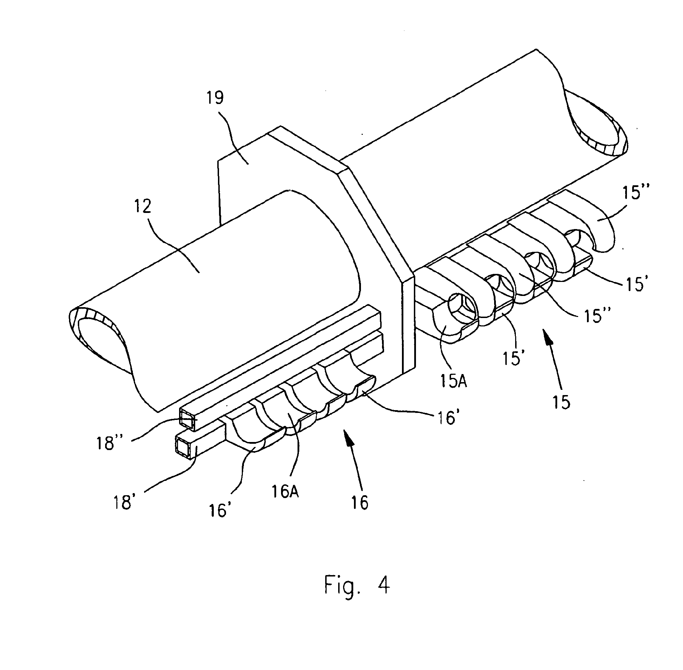

- Fig. 4 shows a perspective view of part of the drum of the apparatus of Fig. 1;
- Fig. 5 shows a detail of an elongated bar-pushing member;
- Fig. 6 shows a top view of a bar-forwarding member coupled with a respective elongated bar-pushing member;
- Fig. 7 shows a cross-sectional view of the bar-forwarding member and the bar-pushing member along the line 7-7 of Fig. 6.

### DETAILED DESCRIPTION OF THE INVENTION

The general features of this invention will be illustrated hereunder by means of several exemplificative embodiments.

Figures from 1 to 4 show a bar feeding apparatus according to this invention, capable of automatically feeding bars to a single-spindle or multi-spindle machine tool.

In particular, in the case of multi-spindle machine tools, the apparatus according to this invention enables the automatic feeding of bars, having a same diameter or different diameters, to the spindles of the machine tool, precisely and reliably over time.

Whereas, in the case of single-spindle machine tools, the apparatus according to this invention enables bars having different diameters to be fed completely automatically, without the need to carry out any replacement or adjustment of the parts of which the apparatus is composed, and without having to use different means each time for supporting and guiding the bars in relation to the diameter of the latter, as in the case of non-automatic feeding of the bars.

The apparatus according to the invention, indicated as a whole by reference number 10, comprises a frame 11, which rotatably supports an elongated drum 12, to turn according to a horizontal axis of rotation.

In particular, the drum 12 is secured at its ends to two circular plates 13 which are rotatably supported by a series of rollers 14 secured to the frame 11.

The apparatus 10 also comprises a plurality of openable front guides 15 for guiding the bars, longitudinally extending on the drum 12 in angularly spaced apart positions, in order to be parallel to one another, and supporting means 16 for supporting the bars at a rear end of the drum 12, disposed in alignment with each front guide 15.

Moreover, forwards to the front guides 15, the apparatus 10 comprises a plurality of centering devices, not shown, which support and center the bars, maintaining them axially aligned with a respective spindle of the machine tool.

Preferentially, the centering devices are fitted on respective tubular members, also not shown, which extend from the drum 12 towards the machine tool, and can for example be of a type having an angularly orientable annular element or having elastic centering plates, or of any other suitable type; moreover, whenever bars of different diameters must be fed, use is made of centering devices having characteristics and diameters sized according to the bars to be fed.

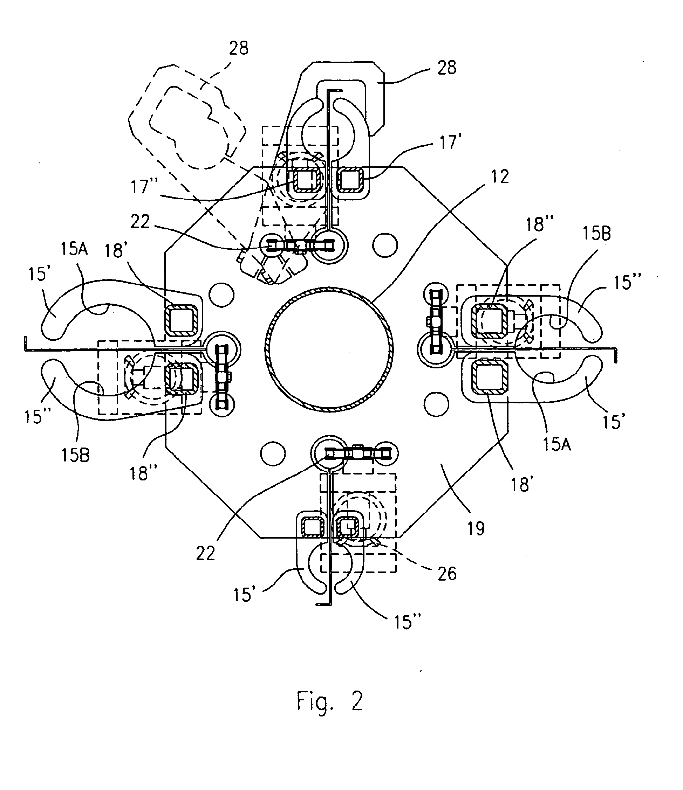

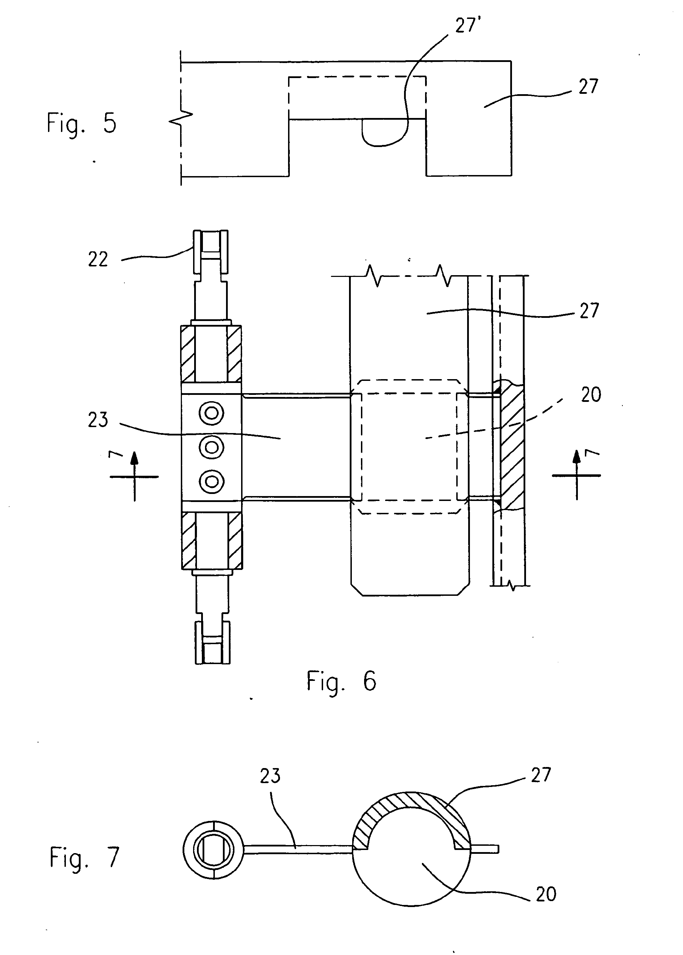

The number of the front guides 15 and of the corresponding rear supporting means 16 disposed on the drum 12 may be chosen according to the operative requirements of the apparatus 10, and can be for example 4, as in the case illustrated in figure 2, or 6, 8, 10 and so forth.

As illustrated in figure 2, each front guide 15 comprises a first series of fixed bar-guiding elements 15' and a second series of movable bar-guiding elements 15", disposed parallel to one another; the second series of movable bar-guiding elements 15" is in particular selectively connectable to drive means, in a position for loading a bar into the guides 15 of the drum 12, to rotate between a closed condition and an open condition of each front guide 15.

The fixed bar-guiding elements 15' and the movable bar-guiding elements 15" each have respective semicircular seats 15A, 15B defining in combination with one another opposing surfaces for guiding the bars.

Each fixed bar-guiding element 15' and each movable bar-guiding element 15" is provided with a square through hole 17', 17" in which a respective tubular rod 18', 18'' is inserted in order to support the bar-guiding elements 15', 15'' in a cantilevered way.

The tubular rods 18', 18'', extending parallel to the axis of the rotating drum 12, are in turn peripherally secured to a plurality of polygonal plates 19 integral with the drum 12, at the edges of which are correspondingly provided a square seat for housing each rod 18' and a circular seat for a bush which enables each rod 18" to rotate freely.

The assembly of the rod 18" and the movable bar-guiding elements 15" can for example be made to rotate between the closed condition and the open condition of the guiding elements 15" themselves, by means of a control lever, not shown, connected to the rod 18", and operated by a suitable actuator in opposition to return springs.

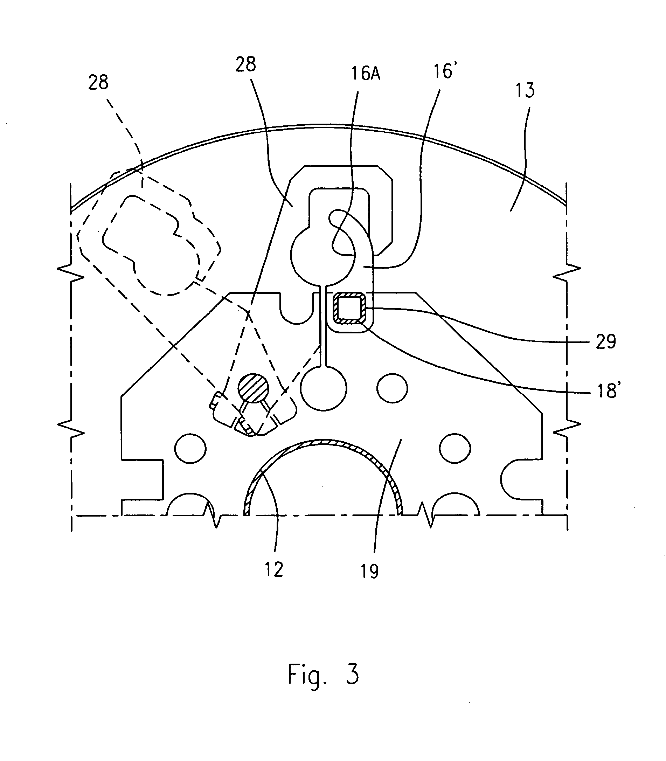

A preferential embodiment for the rear supporting means 16 for the bars, illustrated in figure 3, comprises, for each front guide 15, a plurality of supporting arms 16' secured in a cantilevered way on the drum 12, which are spaced apart from one another in a direction parallel to the axis of rotation of the drum 12 itself.

In a way similar to the fixed bar-guiding elements 15', each of the supporting arms 16' is provided with a square through hole 29 into which a respective tubular rod 18', supporting a series of fixed bar-guiding elements 15', is inserted; furthermore, each of the supporting arms 16' is also provided with a semicircular seat 16A for receiving the bars, defining a surface for supporting the bars themselves.

It cannot be excluded however that the rear supporting means 16 for the bars may be made in any other suitable way, for example by providing a single supporting bracket, disposed in alignment with each front guide 15.

The apparatus 10 also comprises pre-forwarding means for pre-forwarding the bars, in correspondence with the rear supporting means 16, designed to impose a first forward movement to each bar along the drum 12 until it is brought in correspondence with the front guides 15.

Said pre-forwarding means for pre-forwarding the bars preferentially comprise a forwarding member 20 sliding parallel to the drum 12 along the rear supporting means 16, which is selectively connectable to a drive motor 21.

Each forwarding member 20 is for example in the form of a slider connected to a draw chain 22 by means of a plate 23, the chain 22 winding around gear wheels 24 which in turn are correspondingly connected to a plurality of peripheral control gears 25, disposed circumferentially on the drum 12, by means of respective connecting bevel gear pairs 26.

The apparatus 10 also comprises a plurality of elongated bar-pushing members 27, each in correspondence with a respective front guide 15, and lifting means 28 for lifting the bar-pushing members 27, disposed on the drum 12 rearwards to the front guides 15.

In particular, as shown in figure 3, the lifting means are preferentially in the form of shaped arms 28, supported by the drum 12 to rotate angularly with the bar-pushing members 27, between a first position in which each lifting arm 28 is axially aligned with a respective front guide 15, and a second position spaced apart from the first, illustrated by the broken line in the figure, in correspondence with which a bar can be loaded into the front guide 15 and onto the respective rear supporting means 16, by means of a suitable automatic loader, not shown.

The control for the rotation of each lifting arm 28 can be selectively obtained in any appropriate way, for example by providing, on one side of the frame 11, a control cylinder, not shown, having a rod engageable with a lateral protrusion of the lifting arms 28, when each arm 28, with the rotation of the drum 12, comes to rest in an angular position for loading the bars.

Each of the elongated bar-pushing members 27 is shaped to engage with and disengage from a respective bar-forwarding member 20, in correspondence with the first position of each lifting arm 28 for lifting the bar-pushing members 27; for example, as shown in figures from 5 to 7, each pushing member 27 can be provided with a slot 27' to engage with a respective bar-forwarding member 20.

The peripheral control gears 25 for controlling the bar-forwarding members 20 are supported to rotate with the drum 12, and respectively for selectively engaging with and disengaging from at least one coplanar central gear 30 connected to the drive motor 21 by means of a chain drive 31; the central gear 30 is in a misaligned position with respect to the axis of rotation of the drum 12 in such a way as to selectively engage in sequence each peripheral gear 25 along a pre-established arc of circumference, by the rotation of the drum 12 itself.

In this way, the forwarding member 20 coming from time to time to rest in the loading position for the bars, is controlled in order to carry out the following sequence of operations:
- imposing a first forward movement to the loaded bar, by making the forwarding member 20 slide forward along the rear supporting means 16, until the rear end of the bar itself is brought in correspondence with the front guides 15;
- returning the forwarding member 20, to a backward position in which a corresponding bar-pushing member 27 can engage with it by means of a downward rotation of the respective lifting arm 28;
- causing the forwarding member 20 provided with a bar-pushing member 27 to slide forward again along the entire drum 12, so as to feed the loaded bar to a spindle of the machine tool; and
- sliding back the forwarding member 20 with the bar-pushing member 27, so as to be able to discard the crop end of the bar remaining after the processing, by means of a special self-centering ejector, not shown.

When the apparatus 10 is used for automatically feeding bars of different diameters to a single-spindle machine tool, at least one of the front guides 15 and the corresponding rear supporting means 16 for supporting the bars have respective guiding surfaces 15A, 15B and supporting surfaces 16A having points of contact with the bars disposed along a circumference having a different diameter with respect to that of the other front guides 15 and of the corresponding supporting means 16 for the bars.

For example, in figure 2, the guiding surfaces 15A, 15B and supporting surfaces 16A of each front guide 15 and of the corresponding rear supporting means 16 have points of contact with the bars disposed on a circumference having a different diameter with respect to that of the other front guides 15 and of the corresponding supporting means 16 for supporting the bars, each of said circumference being defined by the semicircular seats 15A, 15B; 16A of a respective front guide 15 and of the corresponding supporting means 16.

In this way, in order to feed a bar of a specific diameter, it is sufficient to rotate the drum so as to position the front guide and the rear means capable of guiding and supporting the aforesaid bar, in alignment with the spindle of the machine tool.

In addition, the apparatus according to the invention, used in combination with a multi-spindle machine tool, or with a single-spindle machine tool, offers a precise and reliable operation over time, in that the rear supporting means are no longer a separate external member, but are an integral part of the drum, thereby proving to be devoid of problems relating to coordination of the movements of the various parts of the apparatus.

What has been described and shown with reference to the accompany drawings, has been given purely by way of example in order to illustrate the general features of the invention, as well as several of its preferential embodiments. Other modifications and variations to the apparatus for automatically feeding bars are possible without departing from the scope of the claims.

## Claims

1. A bar feeding apparatus (10) for automatically feeding bars to at least one spindle of a machine tool, the apparatus (10) comprising:
- an elongated drum (12), rotatably supported to turn about a horizontal axis;
- a plurality of openable front guides (15) for guiding the bars, longitudinally extending on said drum (12) in angularly spaced apart positions;
- supporting means (16) for supporting the bars at a rear end of the drum (12);
- pre-forwarding means (20) for the bars, in correspondence with said rear supporting means (16), said pre-forwarding means (20) being designed to impose a first forward movement to each bar along the drum (12) to bring it in correspondence with said front guides (15);
- a plurality of elongated pushing members (27) for pushing the bars, each in correspondence with a respective front guide (15); and
- lifting means (28) for lifting the bar-pushing members (27), disposed on said drum (12) rearwards to the front guides (15), said lifting means (28) being supported to angularly rotate with said bar-pushing members (27), between a first position in which each lifting means (28) is axially aligned with a respective front guide (15), and a second position spaced apart from the first,
**characterised in that** said rear supporting means (16) for supporting the bars are disposed on said drum (12) in alignment with each front guide (15),
**in that** said pre-forwarding means (20) for pre-forwarding the bars comprise a forwarding member (20) sliding parallel to the drum (12) along said rear supporting means (16), said forwarding member (20) being selectively connectable to a drive motor (21), and
**in that** each of said elongated bar-pushing members (27) is shaped to engage with and disengage from a respective forwarding member (20) for the bars, in correspondence with said first position of each lifting means (28) for lifting the bar-pushing members (27).

2. Apparatus (10) for automatically feeding bars according to claim 1, **characterised in that** at least one of said front guides (15) and the corresponding rear supporting means (16) for supporting the bars have respective guiding surfaces (15A, 15B) and supporting surfaces (16A) having points of contact with the bars disposed along a circumference having a different diameter with respect to that of the other front guides (15) and of the corresponding supporting means (16) for supporting the bars.

3. Apparatus (10) for automatically feeding bars according to claim 2, **characterised in that** the guiding surfaces (15A,15B) and supporting surfaces (16A) of each front guide (15) and of the corresponding rear supporting means (16) have points of contact with the bars disposed on a circumference having a different diameter with respect to that of the other front guides (15) and of the corresponding means for supporting (16) the bars.

4. Apparatus (10) for automatically feeding bars according to claim 1 or 2, **characterised in that** said rear supporting means (16) for supporting the bars comprise, for each front guide (15), a plurality of supporting arms (16') secured in a cantilevered way on said drum (12), said supporting arms (16') being spaced apart from one another in a direction parallel to the axis of rotation of the drum (12) itself.

5. Apparatus (10) for automatically feeding bars according to claim 4, **characterised in that** each of said supporting arms (16') has a semicircular seat for receiving the bars, defining a supporting surface (16A) for the bars themselves.

6. Apparatus (10) for automatically feeding bars according to claim 1, **characterised in that** each front guide (15) comprises a first series of fixed bar-guiding elements (15') and a second series of movable bar-guiding elements (15"), disposed parallel to one another, said second series of movable bar-guiding elements (15") being selectively connectable to drive means, in a loading position for a bar onto the guides (15) of the drum (12), to rotate between a closed condition and an open condition of each front guide (15).

7. Apparatus (10) for automatically feeding bars according to claim 6, **characterised in that** the fixed bar-guiding elements (15') and the movable bar-guiding elements (15") each have respective semicircular seats defining in combination with one another opposing guide surfaces (15A, 15B) for guiding the bars.

8. Apparatus (10) for automatically feeding bars according to claim 1, **characterised by** comprising a plurality of peripheral gears (25) disposed circumferentially on the drum (12), each of which being operatively connected to a respective forwarding member (20) for forwarding the bars, said peripheral gears (25) being supported to rotate with the drum (12), and respectively to selectively engage with and disengage from at least one coplanar central gear (30) connected to a drive motor (21), said central gear (30) being in a misaligned position with respect to the axis of rotation of the drum (12) to selectively engage in sequence each peripheral gear (25) along a pre-established arc of circumference, by the rotation of the drum (12) itself.

9. Apparatus (10) for automatically feeding bars according to claim 1, **characterised in that** each elongated member (27) for pushing the bars comprises a slot (27') to engage with a respective bar-forwarding member (20).

10. Apparatus (10) for automatically feeding bars according to claim 1 or 2, in particular for feeding bars to a single-spindle machine tool.

11. Apparatus (10) for automatically feeding bars according to claim 1 or 2, in particular for feeding bars to a multi-spindle machine tool.

## Patentansprüche

1. Stangenzuführvorrichtung (10) zum automatischen Zuführen von Stangen zu wenigstens einer Spindel einer Werkzeugmaschine, wobei die Vorrichtung (10) umfasst:
- einen länglichen Zylinder (12), der drehbar zum Drehen um eine horizontale Achse gelagert ist;
- mehrere öffenbare vordere Führungen (15) zum Führen der Stangen, die sich in Längsrichtung auf dem genannten Zylinder (12) in einem Winkelabstand zueinander erstrecken;
- Stützmittel (16) zur Abstützung der Stangen an einem hinteren Ende des Zylinders (12);
- zu den genannten hinteren Stützmitteln (16) korrespondierende Vorfördermittel (20) für die Stangen, wobei die Vorfördermittel (20) dazu ausgelegt sind, jede Stange zu einer ersten Vorwärtsbewegung entlang des Zylinders (12) zu bewegen, um diese in Übereinstimmung mit den genannten vorderen Führungen (15) zu bringen;
- mehrere längliche Schubelemente (27) zum Schieben der Stangen, jedes in Übereinstimmung mit einer jeweiligen vorderen Führung (15); und
- Hebemittel (28) zum Anheben der Stangen-Schubelemente (27), die auf dem genannten Zylinder (12) rückwärtig von den vorderen Führungen (15) angeordnet sind, wobei die Hebemittel (28) derart gelagert sind, dass sie mit den genannten Stangen-Schubelementen (27) zwischen einer ersten Position, in welcher jedes der Hebemittel (28) axial fluchtend zur jeweiligen vorderen Führung (15) ausgerichtet ist, und einer zweiten Position, die von der ersten beabstandet ist, verschwenkt werden können,
**dadurch gekennzeichnet, dass** die genannten hinteren Stützmittel (16) zur Abstützung der Stangen in einer Flucht mit der jeweiligen vorderen Führung (15) auf dem genannten Zylinder (12) angeordnet sind,
dass die genannten Vorfördermittel (20) zum Vorfördern der Stangen ein Förderelement (20) umfassen, das entlang der genannten hinteren Stützmittel (16) parallel zum Zylinder (12) verschiebbar ist, wobei das genannte Förderelement (20) wahlweise mit einem Antriebsmotor (21) verbindbar ist, und,
dass jedes der genannten länglichen Stangen-Schubelemente (27) derart ausgestaltet ist, dass es in Übereinstimmung mit der genannten ersten Position eines jeden Hebemittels (28) zum Anheben der Stangen-Schubelemente (27) mit einem zugehörigen Förderelement (20) für die Stangen verbindbar und von diesen lösbar ist.

2. Vorrichtung (10) zum automatischen Zuführen von Stangen nach Anspruch 1,
**dadurch gekennzeichnet, dass** wenigstens eine der genannten vorderen Führungen (15) und das korrespondierende hintere Stützmittel (16) zur Abstützung der Stangen Führungsflächen (15A, 15B) bzw. Stützflächen (16A) aufweisen, die Kontaktbereiche mit den Stangen besitzen, die entlang eines Kreislinie angeordnet sind, die einen unterschiedlichen Durchmesser in Bezug auf den Durchmesser der anderen vorderen Führungen (15) und der korrespondierenden Stützmittel (16) zur Abstützung der Stangen besitzen.

3. Vorrichtung (10) zum automatischen Zuführen von Stangen nach Anspruch 2,
**dadurch gekennzeichnet, dass** die Führungsflächen (15A, 15B) und die Stützflächen (16A) einer jeden vorderen Führung (15) und des korrespondierenden hinteren Stützmittels (16) Kontaktbereiche mit den Stangen besitzen, die auf einer Kreislinie angeordnet sind, die einen unterschiedlichen Durchmesser in Bezug auf den Durchmesser der anderen vorderen Führungen (15) und der korrespondierenden Mittel (16) zur Abstützung der Stangen besitzen.

4. Vorrichtung (10) zum automatischen Zuführen von Stangen nach Anspruch 1 oder 2,
**dadurch gekennzeichnet, dass** die genannten hinteren Stützmittel (16) zur Abstützung der Stangen für jede vordere Führung (15) mehrere in auskragender Weise am genannten Zylinder (12) befestigte Stützarme (16') umfassen, wobei die Stützarme (16') in einer Richtung parallel zur Rotationsachse des Zylinders (12) selbst zueinander beabstandet sind.

5. Vorrichtung (10) zum automatischen Zuführen von Stangen nach Anspruch 4,
**dadurch gekennzeichnet, dass** jeder der genannten Stützarme (16') einen halbkreisförmigen Sitz zur Aufnahme der Stangen besitzt, die selbst eine Stützfläche (16A) für die Stangen definiert.

6. Vorrichtung (10) zum automatischen Zuführen von Stangen nach Anspruch 1,
**dadurch gekennzeichnet, dass** jede vordere Führung (15) eine erste Reihe feststehender Stangen-Führungselemente (15') und eine zweite Reihe beweglicher Stangen-Führungselemente (15 ") umfasst, die parallel zueinander angeordnet sind, wobei die zweite Reihe der beweglichen Stangen-Führungselemente (15 ") wahlweise mit einem Antriebsmittel verbindbar ist, um in einer Position zur Aufnahme einer Stange in die Führungen (15) des Zylinders (12) zwischen einer geschlossenen Stellung und einer offenen Stellung jeder vorderen Führung (15) zu rotieren.

7. Vorrichtung (10) zum automatischen Zuführen von Stangen nach Anspruch 6,
**dadurch gekennzeichnet, dass** die feststehenden Stangen-Führungselemente (15') und die beweglichen Stangen-Führungselemente (15") jeweils halbkreisförmige Sitze aufweisen, die gemeinsam sich gegenüberliegende Führungsflächen (15A, 15B) zum Führen der Stangen definieren.

8. Vorrichtung (10) zum automatischen Zuführen von Stangen nach Anspruch 1, **gekennzeichnet durch** mehrere dezentrale Zahnräder (25), die umfangseitig auf dem Zylinder (12) angeordnet sind, von denen jedes mit einem zugehörigen Förderelement (20) zum Fördern der Stangen wirkverbunden ist, wobei die genannten dezentralen Zahnräder (25) derart gelagert sind, dass sie mit dem Zylinder (12) rotieren, und jeweils wahlweise mit wenigstens einem planparallelen zentralen Zahnrad (30), das mit einem Antriebsmotor (21) verbunden ist, in Eingriff stehen oder von diesem ausgekuppelt sind, wobei das zentrale Zahnrad (30) in einer nicht fluchtenden Lage in Bezug auf die Rotationsachse des Zylinders (12) angeordnet ist, um bei einer Rotation des Zylinders (12) selbst wahlweise nacheinander in Eingriff mit jedem dezentralen Zahnrad (25) entlang einer vorgegebenen Kreislinie zu gelangen.

9. Vorrichtung (10) zum automatischen Zuführen von Stangen nach Anspruch 1,
**dadurch gekennzeichnet, dass** jedes längliche Element (27) zum Schieben der Stangen eine Ausnehmung (27') für den Eingriff eines zugehörigen Stangen-Förderelementes (20) umfasst.

10. Vorrichtung (10) zum automatischen Zuführen von Stangen nach Anspruch 1 oder 2, insbesondere zum Zuführen von Stangen zu einer Werkzeugmaschine mit einer einzigen Spindel.

11. Vorrichtung (10) zum automatischen Zuführen von Stangen nach Anspruch 1 oder 2, insbesondere zum Zuführen von Stangen zu einer Werkzeugmaschine mit mehreren Spindeln.

## Revendications

1. Appareil d'alimentation en barres (10) pour faire avancer automatiquement des barres jusqu'à au moins une broche d'une machine-outil, l'appareil (10) comprenant :
- un tambour allongé (12), supporté à rotation pour tourner autour d'un axe horizontal ;
- une pluralité de guides frontaux ouvrants (15) pour guider les barres, s'étendant longitudinalement sur ledit tambour (12) dans des positions espacées angulairement ;
- un moyen de support (16) pour supporter les barres à une extrémité arrière du tambour (12) ;
- un moyen de pré-avance (20) pour les barres, en correspondance avec ledit moyen de support arrière (16), ledit moyen de pré-avance (20) étant conçu pour imposer un premier mouvement vers l'avant à chaque barre le long du tambour (12) pour l'amener en correspondance avec lesdits guides frontaux (15) ;
- une pluralité de poussoirs allongés (27) pour pousser les barres, chacun en correspondance avec un guide frontal (15) respectif ; et
- un moyen de levage (28) pour lever les poussoirs (27), disposé sur ledit tambour (12) en arrière des guides frontaux (15), ledit moyen de levage (28) étant supporté pour effectuer une rotation angulaire avec lesdits poussoirs (27), entre une première position dans laquelle chaque moyen de levage (28) est aligné axialement avec un guide frontal (15) respectif, et une deuxième position espacée de la première,
**caractérisé en ce que** ledit moyen de support arrière (16) pour supporter les barres est disposé sur ledit tambour (12) en alignement avec chaque guide frontal (15),
**en ce que** ledit moyen de pré-avance (20) pour pré-avancer les barres comprend un élément d'avance (20) qui glisse parallèlement au tambour (12) le long dudit moyen de support arrière (16), ledit élément d'avance (20) pouvant être connecté sélectivement à un moteur d'entraînement (21), et
**en ce que** chacun desdits poussoirs allongés (27) a une forme prévue pour le mettre en prise et le dégager d'un élément d'avance (20) respectif pour les barres, en correspondance avec la première position de chaque moyen de levage (28) pour lever les poussoirs (27).

2. Appareil (10) pour faire avancer automatiquement des barres selon la revendication 1, **caractérisé en ce que** au moins l'un des guides frontaux (15) et le moyen de support arrière (16) correspondant pour supporter les barres ont des surfaces de guidage respectives (15A, 15B) et des surfaces de support (16A) ayant des points de contact avec les barres disposées le long d'une circonférence ayant un diamètre différent par rapport à celui des autres guides frontaux (15) et du moyen de support correspondant (16) pour supporter les barres.

3. Appareil (10) pour faire avancer automatiquement des barres selon la revendication 2, **caractérisé en ce que** les surfaces de guidage (15A, 15B) et les surfaces de support (16A) de chaque guide frontal (15) et du moyen de support arrière correspondant (16) ont des points de contact avec les barres disposées sur une circonférence ayant un diamètre différent par rapport à celui des autres guides frontaux (15) et du moyen de support (16) de barres correspondant.

4. Appareil (10) pour faire avancer automatiquement des barres selon la revendication 1 ou 2, **caractérisé en ce que** ledit moyen de support arrière (16) pour supporter les barres comprend, pour chaque guide frontal (15), une pluralité de bras de support (16') fixés en porte-à-faux sur ledit tambour (12), lesdits bras de support (16') étant espacés les uns des autres dans une direction parallèle à l'axe de rotation du tambour (12) lui-même.

5. Appareil (10) pour faire avancer automatiquement des barres selon la revendication 4, **caractérisé en ce que** chacun desdits bras de support (16') a un siège semi-circulaire pour recevoir les barres, définissant une surface de support (16A) pour les barres elles-mêmes.

6. Appareil (10) pour faire avancer automatiquement des barres selon la revendication 1, **caractérisé en ce que** chaque guide frontal (15) comprend une première série d'éléments de guidage de barre fixes (15') et une deuxième série d'éléments de guidage de barre mobiles (15"), disposés parallèlement les uns aux autres, la deuxième série d'éléments de guidage de barre mobiles (15") pouvant être connectée de manière sélective à un moyen d'entraînement, dans une position de chargement pour une barre sur les guides (15) du tambour (12), pour tourner entre un état fermé et un état ouvert de chaque guide frontal (15).

7. Appareil (10) pour faire avancer automatiquement des barres selon la revendication 6, **caractérisé en ce que** les éléments de guidage de barre fixes (15') et les éléments de guidage de barre mobiles (15") ont chacun des sièges semicirculaires respectifs définissant en association mutuelle des surfaces de guidage opposées (15A, 15B) pour guider les barres.

8. Appareil (10) pour faire avancer automatiquement des barres selon la revendication 1, **caractérisé en ce qu'**il comprend une pluralité d'engrenages périphériques (25) disposés de manière circonférentielle sur le tambour (12), chacun d'entre eux étant connecté fonctionnellement à un élément d'avance (20) respectif pour faire avancer les barres, les engrenages périphériques (25) étant supportés pour tourner avec le tambour (12), et respectivement pour se mettre en prise et se dégager d'au moins un engrenage central coplanaire (30) connecté à un moteur d'entraînement (21), ledit engrenage central (30) étant dans une position décalée par rapport à l'axe de rotation du tambour (12) pour se mettre en prise de manière sélective en séquence avec chaque engrenage périphérique (25) le long d'un arc de circonférence préétabli, par la rotation du tambour (12) lui-même.

9. Appareil (10) pour faire avancer automatiquement des barres selon la revendication 1, **caractérisé en ce que** chaque poussoir allongé (27) pour pousser les barres comprend une fente (27') pour se mettre en prise avec un élément d'avance (20) respectif.

10. Appareil (10) pour faire avancer automatiquement des barres selon la revendication 1 ou 2, en particulier pour faire avancer des barres jusqu'à une machine-outil à une seule broche.

11. Appareil (10) pour faire avancer automatiquement des barres selon la revendication 1 ou 2, en particulier pour faire avancer des barres jusqu'à une machine-outil à plusieurs broches.
